# EUROPEAN PATENT SPECIFICATION

(11) **EP 0 989 158 B1**
(45) Date of publication and mention of the grant of the patent: **13.10.2004**
(21) Application number: 99121109.5
(22) Date of filing: 26.01.1995
(51) Int. Cl.: C08J 9/12, C08J 9/228

(54) **Process for the preparation of expanded articles of biodegradable plastic material**
Verfahren zur Herstellung Schaumkörper von biologische abbaubaren Kunststoffmaterialien
Procédé pour la préparation de corps expansés de matières plastiques biodégradables

(30) Priority: 09.02.1994 IT MI940228
(43) Date of publication of application: 29.03.2000
(62) Divisional of application: 95101020.6
(73) Proprietor: NOVAMONT S.p.A., 28100 Novara (IT)
(72) Inventor: Bastioli, Catia, 28100 Novara (IT); Bellotti, Vittorio, 28010 Fontaneto D'Agogna (NO) (IT); Del Tredici, Gianfranco, 21018 Sesto Calende (VA) (IT); Rallis, Angelos, 28100 Novara (IT)
(74) Representative: Rambelli, Paolo

(56) References cited:
- EP-A- 0 376 201
- CH-A- 679 564
- DE-C- 4 236 717
- US-A- 5 080 914
- US-A- 5 413 655
- TATAKKA P.D. ET AL: 'properties of protective loose-fill foams' JOURNAL OF APPLIED POLYMER SCIENCE vol. 67, 1998, USA, pages 1157 - 1176

## Description

The present invention relates to a process for preparing foamed articles made of a biodegradable plastic material.

In the sector of foamed materials, used, in particular, for protective packages, the need is felt to a higher and higher extent, for replacing foamed polystyrene with materials which meet the more and more stringent biodegradability requirements.

For that purpose, the use of starch-based materials was proposed in the past.

European patent application EP-A-0 087 847 discloses a process for preparing starch-based foamed articles, by heating starch or starch containing materials, in an extruder press in the presence of 10-30 % of water, by weight, and of a foaming agent, followed by extrusion.

European patent application EP-A-0 375 831 discloses foamed articles constituted by high-amylose starch, which display good mechanical and closed-cell-structure characteristics. These foamed articles are prepared by extrusion in the presence of water, at temperature comprised within the range of from 150 too 250 °C, possibly followed by a thermo-forming treatment.

International patent application published with No. WO 91/02023 discloses foamed articles of biodegradable plastic material, prepared by extruding a starch containing composition and a synthetic polymer selected from ethylene, vinyl alcohol and ethylene-acrylic acid copolymers, in the presence of a polymer acid and sodium hydrogen carbonate as the foaming agent.

DE 42 36 717 describes the preparation of foamed articles by agglomeration of starch-based foamed particles which are rendered adhesive with each other by dissolving the surface layer thereof with hot air or dry steam containing less than 5% residual humidity. The particles break down or dissolve if more residual humidity is used.

CH 679 564 A refers to the preparation of starch-based sheets which can be foamed by heating with microwaves.

US 5 080 914 A refers to the preparation of starch-based snack food which can be subjected to microwaves to pop and expand the same.

However, by operating according to the methods known from the prior art, preparing foamed articles having complex shapes and high thickness, is a difficult task. Furthermore, the resulting foamed articles in general do not display a satisfactory stability.

The purpose of the present invention is of providing a process for preparing foamed articles of biodegradable plastic material which do not display the drawbacks affecting the prior art, and are endowed with good mechanical characteristics, in particular good resilience and compressibility.

Therefore, an object of the present invention is a process as defined in the appended claims

The foamed particles which constitute the foamed articles obtained by the process of the present invention have a density preferably comprised within the range of from 0.06 to 0.005 g/cm³, and a size preferably comprised within the range of from 1 to 5 mm.

Said foamed particles have a closed-cell structure. They can have different shapes and, in particular, a substantially spherical shape.

The presence of one or more thermoplastics polymers in the composition of the above said foamed particles makes it possible the melt strength of the composition to be improved, with foamed articles being obtained which are endowed with good resilience and low moisture sensitivity.

The thermoplastic starch which can be used as a component for said foamed particles can be a native starch, preferably corn starch or potato starch, or high-amylose starch grades, preferably containing more than 30% amylose, and waxy starch grades.

Furthermore, physically and chemically modified starches can be used, such as ethoxylated starches, oxypropylated starches, acetate starches, butyrate starches, propionate starches with a substitution degree comprised within the range of from 0.1 to 2, cationic starches, oxidized starches, crosslinked starches, gelated starches, starch complexed with polymer capable of yielding "V"-type complexes, e.g., with ethylene-vinyl alcohol (EVOH), ethylene-acrylic acid (EAA), ethylene-maleic anhydride copolymers, ethylene-ethyl acrylate-maleic anhydride ter-polymers, grafted starches, degraded starches, destructured starches.

Native starch is normally used without submitting it to any preliminary dehydration, with its water content of approximately 9-16% by weight.

The thermoplastic polymer which can be used as components of foamed particles are selected from:
i. Polymer from natural origin, either modified or non-modified, in particular cellulose derivatives, as cellulose acetate, cellulose butyrate with a substitution degree comprised within the range of from 1 to 2.5, possibly plasticized, alkyl celluloses, hydroxy alkyl celluloses, carboxy alkyl cellulose, in particular methyl cellulose, and, furthermore, chitosan, pullulan or casein and caseinates;
ii. Biodegradable polymers of synthetic origin, or obtained by fermentation, in particular polyesters, as homo-and copolymers of aliphatic C₂-C₂₄ hydroxy acids, or the corresponding lactones or lactides thereof, and furthermore polyesters derived from difunctional acids and aliphatic diols, such as, e.g.:
   - poly(epsilon-caprolactone), or its graft or block copolymers, the reaction products of caprolactone oligomers or polymers with aromatic or aliphatic isocynates,
   - lactic acid of lactide polymers, glycolic acid or polyglicolide polymers, lactic acid and glycolic acid copolymers,
   - polyhydroxybutyrate or polyhydroxybutyrate-valerate,
   - polyalkylene succinates and, in particular, polyethylene- or polybutylene succinate, polyethylene- or polybutylene adipate, polyethylene-or polybutylene sebacate, polyethylene- or polybutylene azelate, polyethylene- or propybutylene brassilate and copolymers thereof, possibly copolymerized with aliphatic or aromatic isocynates, possibly with their molecular weight being increased by means of chain extenders;
iii. Polymers capable of forming "V" type complexes with amylose, or polymers containing hydrophilic groups intercalated with hydrophobic sequences, such as:
   - ethylene-vinyl alcohol copolymers containing up to 50% by weight, preferably 10-44% by weight, of ethylene units, oxidised ethylene-vinyl alcohol copolymers, or ethylene-vinyl alcohol copolymers terminated with fatty acids, or grafted with polycaprolactone, or modified with acrylic of methacryloc monomers and/or pyridinium,
   - ethylene-vinyl acetate copolymers, which may also be partially hydrolysed,
   - ethylene-acrylic esters copolymers,
   - ethylene-acrylic esters-maleic anhydride or ethylene-vinyl acetate-glycidyl methacrylate terpolymers,
   - ethylene copolymers with unsaturated acids, such as acrylic acid, methacrylic acid, crotonic acid, itaconic acid, maleic anhydride, and so forth, in particular ethylene-acrylic acid copolymers containing 5-50 %, by mol, and preferably 10-30%, by mol, of units derived from acrylic acid,
   - ethylene termopolymer with vinyl acetate, which may be either totally or partially hydrolysed, with acrylic or methacrylic or crotonic or itaconic acid,
   - aliphatic 6-6, 6-9 or 12 polyamides, aliphatic polyurethanes, random or block polyuretane-polyamide, polyurethane-polyester, polyurethane-polyether, polyamide-polyester, polyamide-polyether, polyester-polyether copolymers;
iv. Polymers capable of forming hydrogen bonds with starch, in particular poly(vinyl alcohol) in various hydrolysis degrees, possibly modified with acrylates or methacrylates, poly(vinyl alcohol) previously plasticized or modified in order to reduce the melting point thereof, possibly containing gelling agents, as boric acid, borates or phosphates, vinyl acetate copolymers (in various hydrolysis degrees) with vinylpyrrolidone or styrene, polyethyloxazolines, polyvinylpyridine.

Preferred thermoplastic polymers are poly(vinyl alcohol), the copolymers of an olefinic monomer, preferably ethylene, with a monomer selected from vinyl alcohol, vinyl acetate, acrylic acid and methacrylic acid, aliphatic polyesters, such as polycaprolactone, poly(butylene succinate) and their copolymers, and aliphatic polyamides.

The foamed particles which constitute the foamed articles obtained by the process of the present invention preferably contain a nucleation agent.

The amount of such a nucleation agent in the foamed material is comprised within the range of from 0.005 to 5% by weight, preferably of from 0.05 to 3% by weight, still more preferably of from 0.2 to 2% by weight.

Useable nucleation agents are, e.g., inorganic compounds, as talc (magnesium silicate), calcium carbonate, and so forth, possibly previously as silanes, titanates, and so forth. Furthermore, organic fillers can be used, as yeast shells from sugar beet processing, dried, ground and powdered sugar beet flesh, wood powder, cellulose powder, and so forth.

The nucleation agent can be added to the mixture used to prepare the foamed particles, or, alternatively, it can be added to the foamed particles as a masterbatch. In the latter case the masterbatch can contain from 10 to 50% of one or more fillers.

The foamed particles can furthermore contain one or more slip agent (s) and/or dispersants having a hydrophile/lipophile balance index ("HLB") comprised within the range of from 3 to 25, preferably comprised within the range of from 6 to 20. When used, these agents van be present in amounts comprised within the range of from 0.01 to 5% by weight, preferably of from 0.1 to 3% by weight.

The foamed particles can also contain one or more plasticizer(s). When used, said plasticizers can be present in amounts comprised within the range of from 0.5 to 20% by weight, preferably of from 0.5 to 5.0% by weight.

Useable plasticizers are, e.g., those as disclosed in published International Patent Application Publ. No. WO 92/14782, the content of which is incorporated to the present disclosure. Particularly suitable for use as plasticizes are glycerol, sorbitol, mannitol, erythritol, low molecular weight poly(vinyl alcohol), their oxyethylated and oxypropylated derivatives, and, furthermore, urea.

Furthermore, the foamed particles can contain one or more flame retardant(s), which can be added to the mixture used in order to prepare the foamed particles or, alternatively, can be added to the foamed particles as a masterbatch, in particular in combination with the nucleating agent.

When they are used, said flame retardants are present in amounts comprise within the range of from 0.1 to 20% by weight, preferably of from 1 to 10% by weight, still more preferably of from 2 to 5% by weight.

The flame retardants which can be selected from those derived from phosphorus containing, sulfur containing or halogenated products. For example, triphenyl phosphate, tributyl phosphate, tricresyl phosphate, tributoxyphenyl phosphate, melamine pyrophosphate, ammonium polyphosphate, ethylene diamine, ammonium polyphosphate, guanidium phosphate, tetrabromophthalic anhydride, halogenated paraffins, diphenyl oxide with different bromination degrees, ammonium sulfate, ammoinium sulfamate, and so forth, are suitable fro the intended purpose. Ammonium sulfate, ammonium sulfamate, ammonium polyphosphate, guanidinium phosphate and melamine pyrophosphate are particularly advantageous.

Other useable flame retardants are aluminium hydroxide, antimony oxide, ammonium perborate, ammonium octamolybdate, and so forth.

For particular applications, the presence may be required in the foamed particles of repellent substances to rodents, which can be added to the mixture used for preparing the foamed particles, or can be added to the foamed particles as active principle containing microcapsules, or as a masterbatch, in particular in combination with the nucleation agents and/or flame retardants.

For that purpose, such substances as N,N-diethyl-m-toluamide, diethylphenyl acetamide, 2-decanal, ammonium chloride, potassium chlorate, terpenoids, cycloheximide, diguanidinoazaheptadecane, and so on, can be used. Terpenoids, and, in particular, menthol and limonene are preferred.

When used, these repellents are present in amounts comprised within the range of from 0.1 to 5% by weight, preferably comprised within the range of from 1 to 3 % by weight.

The foamed particles which constitute the foamed article obtained by the process of the invention can be prepared by means of a process of extrusion of the starch based composition, carried out by means of a single screw or twin screw extruder.

Such an extrusion process, carried out in the presence of a further water amount comprised within the range of from 5 to 20 % by weight, causes the starch contained in the composition to get destructured. However, water content should be controlled by means of a venting system, so as to have a total water content at the nozzle, comprised within the range of from 5 to 20 % by weight.

As an alternative, granules can be used of a thermoplastic starch previously destructured according to such methodologies as know, e.g., from published International Patent Application WO 92/02363 and WO 92/14782, the contents of which are incorporated by reference to the instant application.

The above said extrusion processes are carried out at temperatures generally comprised within the range of from 150 to 250 °C, with residence times generally of from 20 seconds to 15 minutes. The noodle cutting (pelletizing) downstream of the extruder head is carried out at a high speed, so that the molten material is cut when it is not yet solidified and therefore the resulting particles (pellets) turn into substantially spherical particles. The shear values at extruder head generally are higher than 1000 s⁻¹, preferably higher than 3000 s⁻¹.

Another route to prepare the foamed particles consists of a treatment of compressing/depressurizing non-foamed particles having a size comprise within the range of from 20 µm to 1 mm, as diameter. Said non-foamed particles can be obtained, e.g., by extrusion through multi-bore dies and subsequent head cutting, of by grinding larger-size granules. These non-foamed particles are submitted to a pressure comprised within the range of from 2 to 100 bars, in the presence of moisture in equilibrium with water contained in the material, at temperature comprised within the range of from 40 to 200 °C, followed by a fast depressurizing.

Still another method for preparing the foamed particles consists in submitting the above type of non-foamed particles to a heating treatment by microwaves.

The foamed articles of biodegradable plastic material are prepared by means of the process of agglomeration of foamed particles of the above said material, as defined in the appended claims.

The good resilience properties of the foamed particles enable them to withstand any collapsing phenomena when they are brought into an intimate contact stats.

In the process according to the present invention, the foamed particles are treated with a coating agent consisting of I liquid-state water.

The process for preparing the foamed articles of the present invention preferably comprises a step of:
- thermal and/or aeration treatment prior to, simultaneously with, or subsequently to, the step of particles bringing into intimate contacts, in order to facilitate the evaporation of the liquid.

The resulting foamed articles can be suitable submitted to a further post-drying treatment.

This post-drying treatment, which makes it possible any possible residual water to be removed, can be carried out in a dry, humid or conditioned environment.

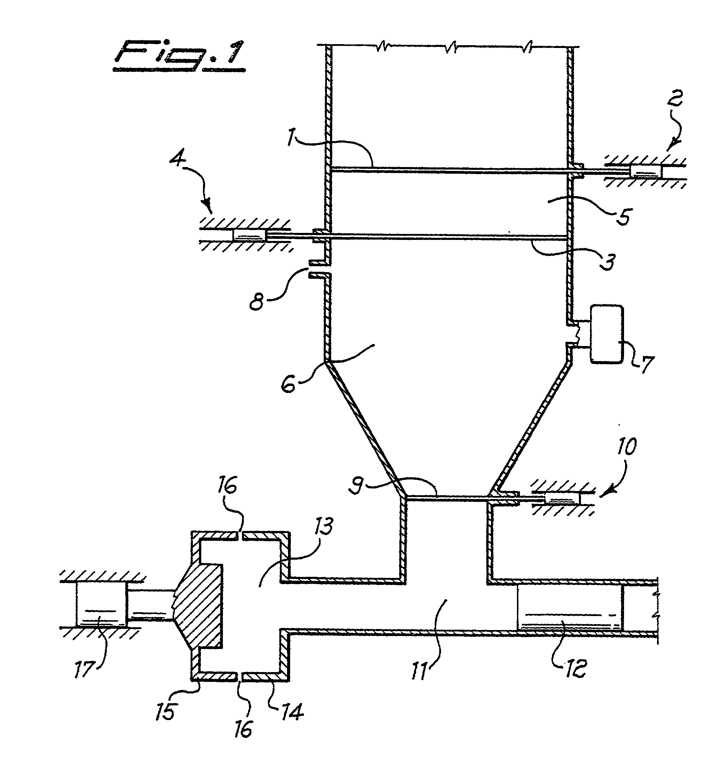

According to a preferred embodiment, the process according to the present invention can be suitably carried out by using a type of apparatus like the one shown in Figure 1.

Referring to the drawing of Figure 1, the reference numerals (1), (3) and (9) indicate slidable separation walls which are pneumatically driven by means of the opening/closure system indicated with (2), (4) and (10), respectively.

With the separation wall (1) open, the foamed particles are charged to the metering chamber (5); the wall (1) is then closed and, by opening the separation wall 83), the particles are caused to fall into the atomization chamber (6); the separation wall (3) is then closed and the atomizer unit 7, containing the coating agent, is started-up and is made operate during a long enough time period in order to cause the chamber (6) to become saturated with the coating agent; now, the atomizer (7) is stopped and, by opening the separation wall (9), the particles are caused to fall into the duct (11); the female and male portions (14) and (15), respectively, of the mould, are kept in such a position that the width of the air gap (16) between them is smaller than the diameter of the pellets; the separation wall (9) is then closed and, by means of the piston (12), the particles are fed to the mould inside which they are submitted to pressure; the mould is finally opened by means of the piston (17), in order to recover the manufactured articles obtained.

According to another preferred embodiment, the process of the present invention can be suitably carried out by submitting the foamed particles to the treatment with the coating agent, directly along the feed channel to the forming chamber in an apparatus like those used to sinter foamed polystyrene particles (mould with venting openings).

Finally, the coating agent can be suitably fed directly through the bores of the mould, after charging the foamed particles to the latter.

The following referential Examples are supplied for merely illustrative purposes.

### Characterization

### Resilience Test

This test is used in order to measure the material capability of recovering its initial shape after being submitted to the action of a force which caused it to get deformed.

A cylindrical container of 125 mm of diameter and 150 mm of height is filled with foamed particles, which are squeezed by the flat sensor of a force gauge, moving forwards with the speed of 25 mm/minute. The sensor presses the particles by 33 % of cylinder height, then returns back to its starting position. One minute later, the sensor performs a second particle compression treatment, according to the same modalities as of the first one.

The resilience value, reported as a % value, is the ratio of the applied force for the first compression stroke, divided by the applied force for the second compression stroke, times 100.

### Density

- Dₐₚₚ (Kg/cm³): Bulk density of foamed particles, calculated from the weight of a 5-litre volume of particles;
- d_{bulk} (Kg/cm³): Pycnometric density of the individual foamed particles;
- dₑₓₚ (Kg/m³): Pycnometric density of the foamed article of manufacture.

### REFERENTIAL EXAMPLE 1

A mixture was prepared with the following composition:
- 75 %, by weight, of potato starch;
- 10 %, by weight, of poly(vinyl alcohol) with the hydrolysis degree of 86%; and
- 15 %, by weight, of water.

This composition was fed to a twin-screw extruded APV 2030 with diameter (d) = 30 mm and length:diameter ratio [(L)/(d)] = 30. The operating conditions were as follows:
- screw revolution speed (rpm) = 150:
- temperature profile: 69 °C/100 °C/180 °C/170 °C/155 °C;
- extruder throughput: 10 Kg/h.

The vent was so adjusted as to keep a total water content of about 14 %.

The so obtained pellets, together with 0.5 % of talc with average particles diameter of about 1.5 µm, were fed to a single-screw extruder ex OMC, with diameter (d) = 40 mm and length:diameter ratio [(L)/(d)] = 28, equipped with an extruder head with 4 nozzles with diameter (d) = 0.8 mm and length:diameter ratio [(L)/)d)]<1.

The operating conditions were as follows:
- screw revolution speed (rpm) =40;
- temperature profile: 80°C/120°C/190°C/190°C/200°C;
- extruder throughput: 52 Kg/h.
- head cutting blade revolution speed: 4,000 rpm.

Pellets of foamed material were obtained, the characteristics of which are reported in Table 1.

### REFERENTIAL EXAMPLE 2

The operating procedure was the same as of Example 1, but a mixture with the following composition was used:
- 64 %, by weight, of potato starch;
- 25 %, by weight, of EVOH containing 44 % of ethylene units by mol, with hydrolysis degree of 99.8 %, and Mw = 70,000;
- 10 %, by weight, of water; and
- 1 %, by weight, of glycerol monooleate.

The water content in the pellet is of approximately 10 %. The characteristics of the foamed pellet are reported in Table 1.

### REFERENTIAL EXAMPLE 3

The operating procedure was the same as of Example 1, but a mixture with the following composition was used:
- 78 %, by weight, of potato starch;
- 7 %, by weight, of EVOH containing 44 % of ethylene units by mol, hydrolysis degree of 99.8 %, and mw = 70,000;
- 8 %, by weight, of poly(vinyl alcohol with hydrolysis degree of 86 %;
- 6 %, by weight, of water; and
- 1 %, by weight, of glycerol monooleate.

The water content in the pellet is of approximately 12 %. The characteristics of the foamed pellet are reported in Table 1.

### REFERENTIAL EXAMPLE 4

The operating procedure was the same as of example 1, but a mixture with the following composition was used:
- 69 %, by weight, of potato starch;
- 10 %, by weight, of polycaprolactone UC PCL 787;
- 5 %, by weight, of Pellethane (2102-85AE9, a caprolactone-urethane block copolymer;
- 15 %, by weight, of water; and
- 1 %, by weight, of glycerol monooleate.

The water content in the pellet is of approximately 10 %. The characteristics of the foamed pellet are reported in Table 1.

### REFENTIAL EXAMPLE 5

The operating procedure was the same as of Example 1, but a mixture with the following composition was used:
- 75 %, by weight, of potato starch;
- 10 %, by weight, of a Dow Chemical's ethylene-acrylic acid copolymer containing 20 % of acrylic units by mol; and
- 15 %, by weight, of water.

The water content in the pellet is of approximately 10 %. the characteristics of the foamed pellet are reported in Table 1.

### REFERENTIAL EXAMPLE 6

The operating procedure was the same as of Example 1, but a mixture with the following composition was used:
- 75 %, by weight, of potato starch;
- 10 %, by weight, of cellulose acetate with substitution degree 2.5, plasticized with 20% caprolactone; and
- 15 %, by weight, of water.

The water content in the pellet is of approximately 12 %. The characteristics of the foamed pellet are reported in Table 1.

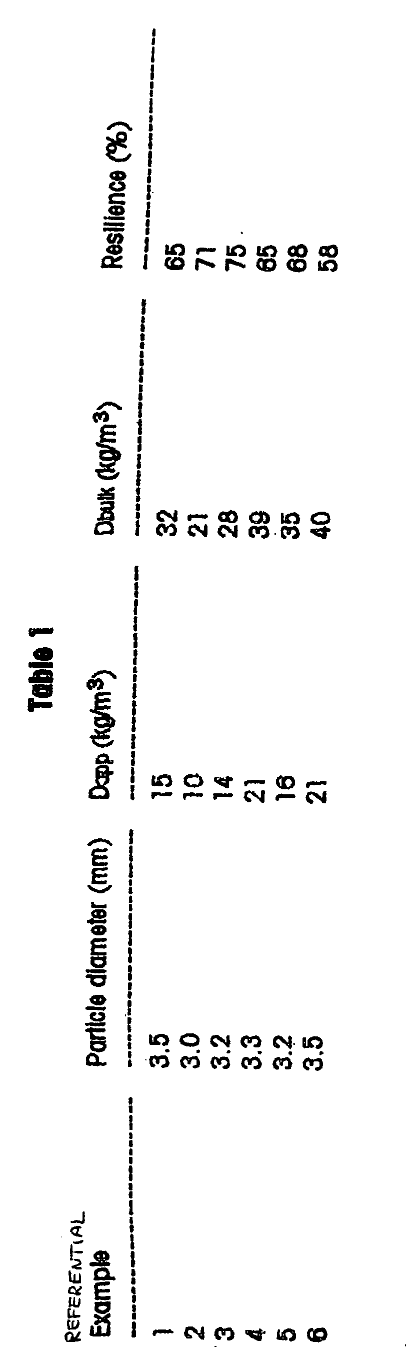

## Claims

1. A process for preparing resilient foamed articles having low moisture sensitivity, made of agglomerated foamed particles, comprising the steps of:
i) submitting foamed particles having density from 0.1 to 0.003 g/cm³ and a size comprised within the range of from 0.5 to 10 mm of diameter, formed of a material comprising:
- from 50 to 95% by wt. of thermoplastic starch;
- from 0.5 to 45% by wt. of a thermoplastic polymer different from thermoplastic starch; and
- from 2 to 20% by wt. of water,
to a treatment with liquid-state water, to modify the surface of the particles to render the same capable of stably interacting each other when they are caused to come into mutual intimate contact, and
ii) agglomerating said particles by keeping the same into intimate contact.

2. A process according to claim 1, wherein in step ii) said particles are subjected to pressure inside a mould chamber.

3. A process according to claims 1 or 2 , wherein the treatment with the coating agent is carried out along a feed channel connecting a mould chamber or by feeding the coating agent directly to a mould chamber.

4. A process according to any of claims 1 to 3, wherein the foamed particles are obtained by submitting to microwave heat treatment non foamed particles.

5. A process according to any of claims 1 to 4, wherein the thermoplastic polymer is selected from the group consisting of polyvinylalcohol, the copolymers of an olefin monomer with a monomer selected from vinylalcohol, vinylacetate, acrylic acid and methacrylic acid, aliphatic polyesters, aliphatic polyamides, polyamide-polyesters, polyurethane-polyesters and cellulose derivatives.

6. A process according to claim 5, wherein the olefin monomer is ethylene and the cellulose derivative is cellulose acetate with a degree of substitution of 1 to 2.5.

7. A process according to claim 5, wherein the aliphatic polyester is selected from polycaprolactone, polybutylene-succinate, polyethylene-sebacate, polybutylene-sebacate, polyethylene-azelate or polybutylene-azelate and their copolymers.

8. A process according to any claims from 1 to 7, wherein the material which constitutes the foamed particles comprises from 0.005 to 5% by wt. of nucleating agent.

9. A process according to any of claims 1 to 8 wherein said foamed particles have a closed cell structure.

## Patentansprüche

1. Verfahren zur Herstellung von elastischen geschäumten Gegenständen mit geringer Feuchtigkeitsempfindlichkeit, die aus agglomerierten geschäumten Teilchen hergestellt sind, umfassend die folgenden Schritte:
i) das Unterziehen von geschäumten Teilchen mit einer Dichte von 0,1 bis 0,003 g/cm³ und einer Größe im Bereich von 0,5 bis 10 mm Durchmesser, die aus einem Material gebildet sind, umfassend:
- 50 bis 95 Gew.-% thermoplastische Stärke;
- 0,5 bis 45 Gew.-% eines thermoplastischen Polymers, das keine thermoplastische Stärke ist; und
- 2 bis 20 Gew.-% Wasser,
einer Behandlung mit flüssigem Wasser zwecks Modifizierung der Oberfläche der Teilchen, um diese fähig zu machen, stabil zu interagieren, wenn sie in einen gegenseitigen innigen Kontakt gebracht werden, und
ii) das Agglomerieren der Teilchen, indem diese in einem innigen Kontakt gehalten werden.

2. Verfahren gemäß Anspruch 1, wobei die Teilchen in Schritt ii) dem Druck in einer Formkammer ausgesetzt werden.

3. Verfahren gemäß den Ansprüchen 1 oder 2, wobei die Behandlung mit dem Beschichtungsmittel entlang einer mit einer Formkammer verbundenen Zuführrinne durchgeführt wird oder durch direktes Einspeisen des Beschichtungsmittels in eine Formkammer.

4. Verfahren gemäß einem der Ansprüche 1 bis 3, wobei die geschäumten Teilchen erhalten werden, indem nicht geschäumte Teilchen einer Mikrowellenwärmebehandlung unterzogen werden.

5. Verfahren gemäß einem der Ansprüche 1 bis 4, wobei das thermoplastische Polymer ausgewählt ist aus der Gruppe, bestehend aus Polyvinylalkohol, den Copolymeren eines Olefinmonomers mit einem Monomer, das ausgewählt ist aus Vinylalkohol, Vinylacetat, Acrylsäure und Methacrylsäure, aliphatischen Polyestern, aliphatischen Polyamiden, Polyamid-Polyestern, Polyurethan-Polyestern und Cellulose-Derivaten.

6. Verfahren gemäß Anspruch 5, wobei das Olefinmonomer Ethylen ist und das CelluloseDerivat Celluloseacetat mit einem Substitutionsgrad von 1 bis 2,5 ist.

7. Verfahren gemäß Anspruch 5, wobei der aliphatische Polyester ausgewählt ist aus Polycaprolacton, Polybutylensuccinat, Polyethylensebacat, Polybutylensebacat, Polyethylenazelat oder Polybutylenazelat und deren Copolymeren.

8. Verfahren gemäß einem der Ansprüche von 1 bis 7, wobei das Material, das die geschäumten Teilchen bildet, 0,005 bis 5 Gew.-% Keimbildner umfasst.

9. Verfahren gemäß einem der Ansprüche 1 bis 8, wobei die geschäumten Teilchen eine geschlossene Zellstruktur aufweisen.

## Revendications

1. Procédé pour la préparation de matériaux alvéolés souples ayant une faible sensibilité à l'humidité, composés de particules alvéolées agglomérées, comprenant les étapes consistant à :
i) soumettre des particules alvéolées ayant une masse volumique comprise entre 0,1 à 0,003 g/cm³ et une taille située dans la gamme de 0,5 à 10 mm de diamètre, constituées d'un matériau comprenant :
- entre 50 et 95% en poids d'amidon thermoplastique ;
- entre 0,5 et 45% en poids d'un polymère thermoplastique autre que l'amidon thermoplastique, et
- entre 2 et 20% en poids d'eau,
à un traitement avec de l'eau à l'état liquide, afin de modifier la surface des particules pour les rendre capables d'interagir de manière stable entre elles quand on les fait entrer en contact mutuel étroit, et
ii) agglomérer lesdites particules en maintenant celles-ci en contact étroit entre elles.

2. Procédé selon la revendication 1, dans lequel dans l'étape ii) lesdites particules sont soumises à la pression à l'intérieur d'une chambre de moulage.

3. Procédé selon les revendications 1 ou 2, dans lequel le traitement avec l'agent d'enrobage est effectué tout au long d'une conduite d'alimentation liée à une chambre de moulage ou en alimentant directement la chambre de moulage avec l'agent d'enrobage.

4. Procédé selon l'une quelconque des revendications 1 à 3, dans lequel les particules alvéolées sont obtenues en soumettant des particules non alvéolées à un traitement thermique par micro-ondes.

5. Procédé selon l'une quelconque des revendications 1 à 4, dans lequel le polymère thermoplastique est choisi dans le groupe consistant en le polyvinylalcool, les copolymères d'un monomère oléfinique avec un monomère choisi parmi l'alcool vinylique, l'acétate de vinyle, l'acide acrylique et l'acide méthacrylique, les polyesters aliphatiques, les polyamides aliphatiques, les polyamide-polyesters, les polyuréthane-polyesters et les dérivés de cellulose.

6. Procédé selon la revendication 5, dans lequel le monomère oléfinique est l'éthylène et le dérivé de cellulose est l'acétate de cellulose avec un degré de substitution de 1 à 2,5.

7. Procédé selon la revendication 5, dans lequel le polyester aliphatique est choisi parmi la polycaprolactone, le polybutylène-succinate, le polyéthylène-sébacate, le polybutylène-sébacate, le polyéthylène-azélate ou le polybutylène-azélate et leurs copolymères.

8. Procédé selon l'une quelconque des revendications 1 à 7, dans lequel le matériau qui constitue les particules alvéolées comprend de 0,005 à 5% en poids d'agent de nucléation.

9. Procédé selon l'une quelconque des revendications 1 à 8, dans lequel lesdites particules alvéolées ont une structure à alvéoles fermées.
